# EUROPÄISCHE PATENTANMELDUNG

(11) **EP 1 206 108 A1**
(43) Veröffentlichungstag der Anmeldung: **15.05.2002**
(21) Anmeldenummer: 00124601.6
(22) Anmeldetag: 10.11.2000
(51) Int. Cl.: H04M 11/00, H04L 29/06

(54) **Verfahren und System zum Betreiben eines fernbedienbaren Mess- oder Überwachungsgeräts**

(71) Anmelder: Acterna Eningen GmbH, 72800 Eningen (DE)
(72) Erfinder: Godbillon, Pierre, 72793 Pfullingen (DE)
(74) Vertreter: Klocke, Peter, Dipl.-Ing.

(57) **Zusammenfassung**

Verfahren und System zum Betreiben eines fernbedienbaren Mess- oder Überwachungsgerät (2) mittels eines Kommunikationsnetzwerkes (3,4,5,6). Hierzu wird zur Steuerung des Mess- oder Überwachungsgeräts ein handelsübliches mobiles Handy (1) verwendet und die ankommenden Signale werden mittels einer entsprechenden Schnittstelle, die die Protokolle des Mobilfunksystems, Internets und mobilen Internets umsetzt, zu dem Mess- oder Überwachungsgerät geleitet. Die Erfindung ermöglicht eine kostengünstige Fernbedienung und Fernabfrage durch die Verwendung handelsüblicher Handys ohne zusätzliche Software.

## Beschreibung

Die vorliegende Erfindung betrifft ein Verfahren und ein System zum Betreiben eines fernbedienbaren Mess- oder Überwachungsgeräts mittels eines Kommunikationsnetzwerkes.

In der Mess- und Überwachungstechnik gibt es eine Vielzahl von Anwendungen, bei denen das Gerät ferngesteuert und fernüberwacht wird. Bei den bekannten Verfahren und Systemen handelt es sich entweder um Lösungen mit sehr geringer Reichweite, zum Beispiel Infrarot beziehungsweise geringer Tragweite bei Funk in den freien Frequenzbändern. Andere Anwendungen benötigen den Einsatz von Computern und Modems, wobei der Computer für die Aufgabe entsprechend konfiguriert werden muss.

So ist beispielsweise aus der EP 973 297 ein Messinstrument bekannt, das in der Lage ist, über das Internet versandte Befehle umzusetzen. Hierzu wird ein entsprechender Internet-Browser verwendet, wobei sowohl das Messinstrument als auch die entfernt angeordnete Befehlseinrichtung mit einer entsprechenden Software, die für den jeweiligen Anwendungsfall angepasst ist, ausgerüstet sein muss.

Der vorliegenden Erfindung liegt daher die Aufgabe zugrunde, eine Möglichkeit vorzuschlagen, mit der eine Fernbedienung von Mess- oder Überwachungsgeräten ohne den Einsatz zusätzlicher spezieller Software zumindest bei den entfernt von den Geräten angeordneten Befehlsgeräten notwendig ist.

Diese Aufgabe wird erfindungsgemäß durch ein Verfahren mit den Merkmalen des Anspruchs 1 sowie ein System mit den Merkmalen des Anspruchs 6 gelöst. Weitere vorteilhafte Ausgestaltungen sind den jeweiligen Rückbezogenen Unteransprüchen zu entnehmen.

Gemäß der Erfindung wird ein handelsübliches mobiles Terminal, beispielsweise Mobiltelefon oder ein sonstiges entsprechendes Gerät, ohne jeglichen Zusatz von Software und Hardware und ohne spezifische Konfiguration als Steuergerät benutzt, mit dem der Benutzer die Mess- oder Überwachungseinheit abfragen und steuern kann. Das mobile Terminal arbeitet gemäß den Protokollen des Mobilfunksystems (GSM) und seiner Erweiterungen (z.B. GPRS) bzw. seiner Nachfolger (z.B. UMTS) sowie des mobilen Internets (z.B. WAP). Das fernbedienbare Mess- oder Überwachungsgerät kann dabei an ein mobiles Terminal, einem Datennetz, das selbst einen entsprechenden Zugang zu einem zellularen Telefonnetz hat, oder ein Modem, mit dem eine Verbindung zum Internet oder zu einem Firmennetz aufgebaut werden kann, angebunden sein. Zusätzlich ist eine Bedieneinrichtung (Server) erforderlich, die auf der Basis der Protokolle des mobilen Internets arbeitet und in der Lage ist, die von dem entfernten mobilen Terminal gesandten Signale in entsprechende Steuerbefehle umzusetzen. Zusätzlich kann der Server noch Verwaltungsaufgaben übernehmen und mit mehreren Mess- oder Überwachungsgeräten verbunden sein, diese automatisch abfragen und die von diesem gelieferten Daten verwalten und speichern.

Die Erfindung hat den Vorteil, dass - zumindest in den Industrieländern - ein flächendeckender Einsatz über Funk ohne jegliche Einschränkung bezüglich Entfernung, besondere Genehmigung (Funklizenz) oder Ländergrenzen möglich ist. Darüber hinaus können handelsübliche mobile Terminals verwendet werden, die keine zusätzlichen Soft- und Hardware sowie keine spezifischen Konfiguration bedürfen und daher auch beliebig austauschbar sind. Diese Terminals werden meistens ohnehin vom Bedienungspersonal für andere Zwecke, wie beispielsweise telefonische Erreichbarkeit, mitgeführt und stellen daher keinen zusätzlichen Ballast für das Bedienungspersonal dar und bereiten keine weiteren Kosten. Darüber hinaus ist die Verfügbarkeit und die Anbindung an das Netz gewährleistet, da diese von dem jeweiligen Provider zur Verfügung gestellt wird.

Nachfolgend wird die Erfindung anhand von Ausführungsbeispielen in Verbindung mit den begleiteten Zeichnungen näher erläutert. Es stellen dar:
- Figur 1: Schematische Darstellungen (a bis c) von Systemen, bei denen ein zwischengeschaltetes Netz für den Aufbau der Verbindung zuständig ist;
- Figur 2: schematische Darstellungen (a und b) von Systemen, bei denen das Messgerät den Ruf annimmt;
- Figur 3: die schematische Darstellung eines Systems, bei dem ein zwischengeschalteter Server die Kommunikation zwischen Messgerät und mobilen Terminal abwickelt; und
- Figur 4: die Architektur eines Mess- oder Überwachungsgeräts.

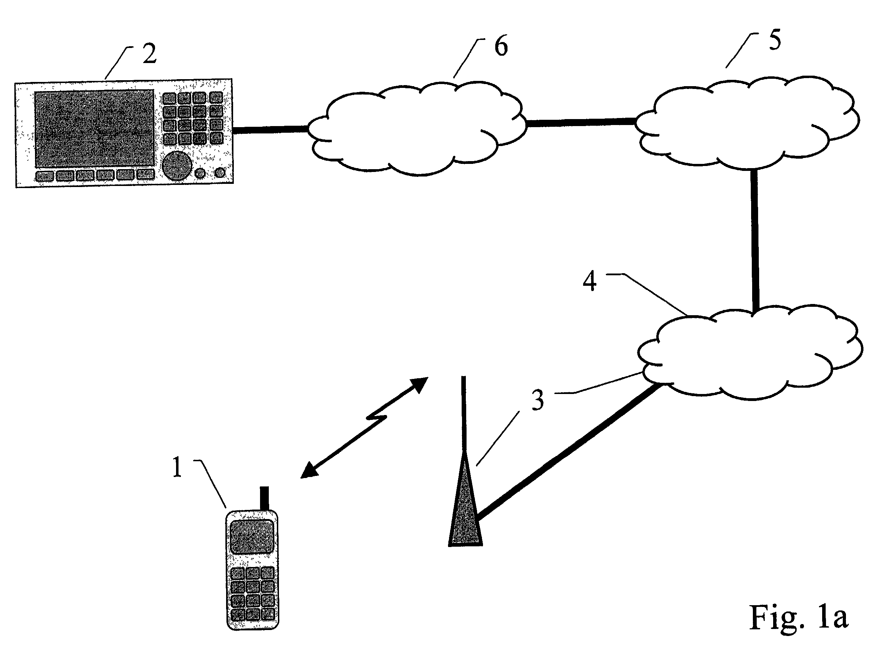

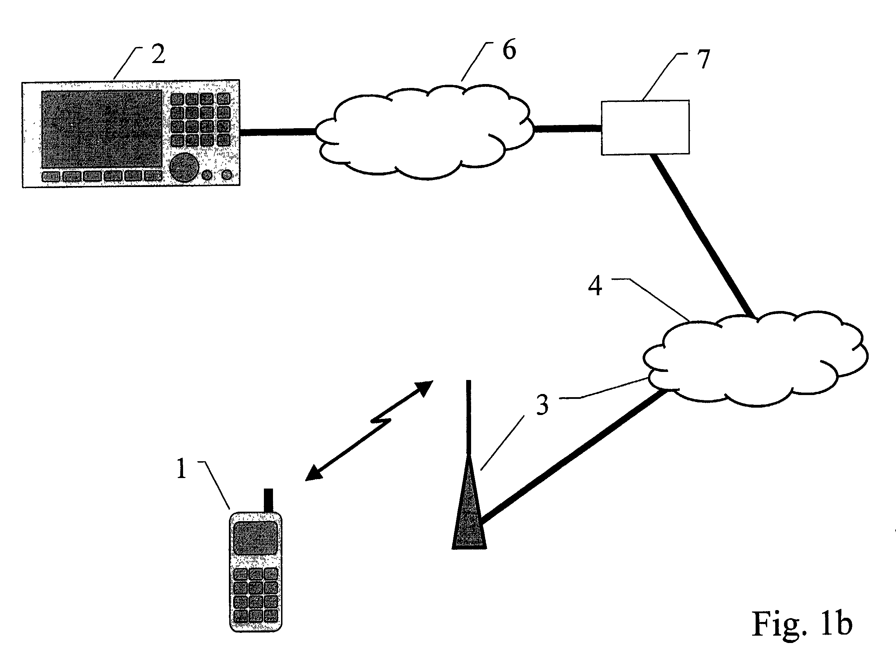

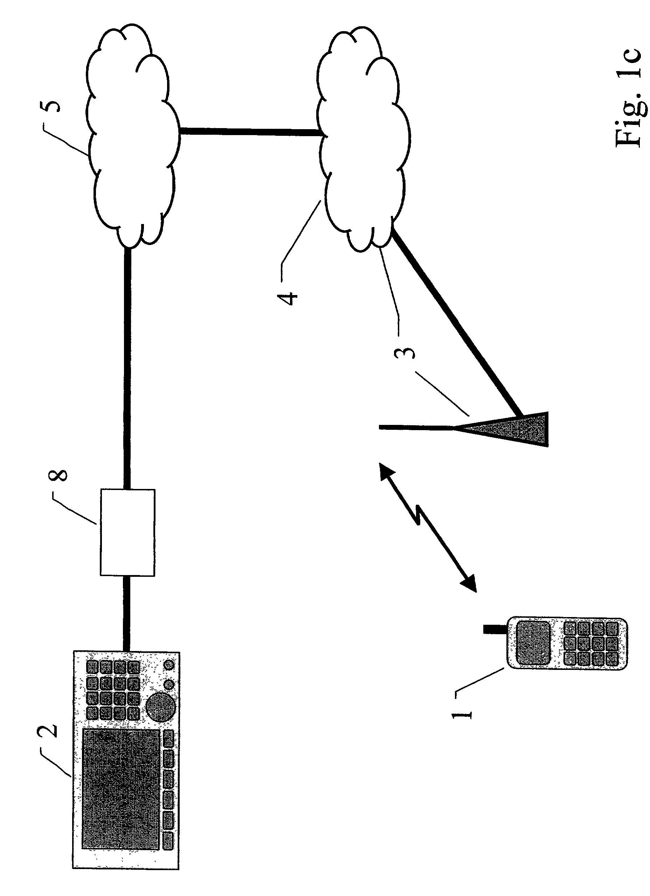

Figur 1a zeigt ein mobiles Terminal 1, beispielsweise WAP-Handy oder Taschencomputer mit größerem Bildschirm und Mobilfunkschnittstelle (PDA), über das die Befehle zu dem entfernten und zu bedienenden Messgeräts 2 eingegeben werden. Die Signale von dem mobilen Terminal 1 werden über das Mobilfunknetz 3 in ein Telefonfestnetz 4 eingespeist und dann durch das Internet 5 dem am Firmennetz 6 angeschlossenen Messgerät 2 zugeführt. Das Messgerät 2 stellt (mittels einer internen Bedienereinrichtung) die Dienste (z.B. WAP, HTTP, Servlets) bereit, mit denen die vom handelsüblichen mobilen Terminal übersandten Kommandos umgesetzt werden können. Figur 1b stellt eine Abwandlung von Figur 1a dar, bei der das Firmennetz 6 einen Einwaldienst 7 bereitstellt. Die Figur 1c ist eine weitere Variante von Figur 1a, bei der das Messgerät 2 direkt mit dem Internet 5 (permanent oder semi-permanent) z.B. über ein Modem 8 ohne zwischengeschaltetes Firmennetz verbunden ist.

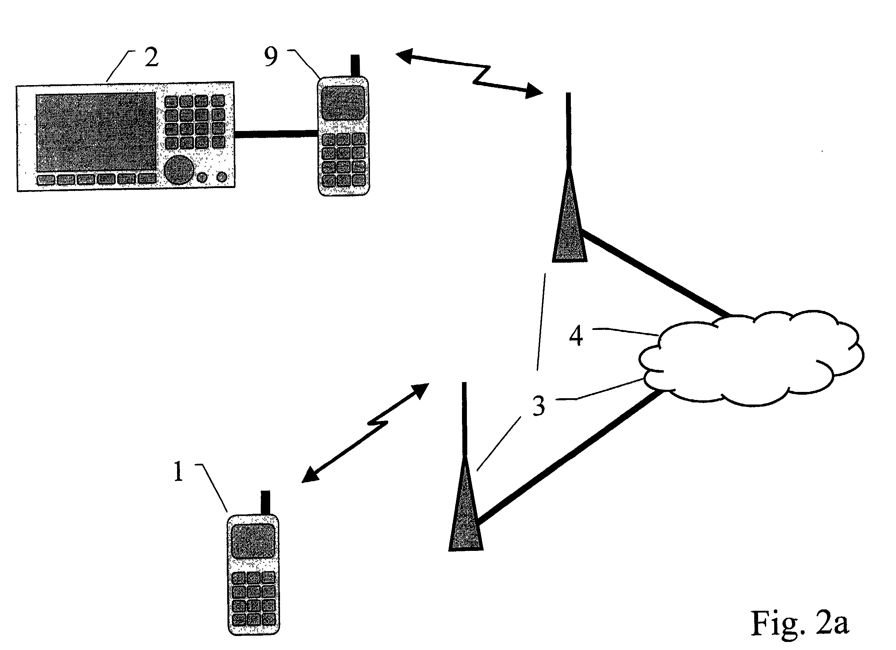

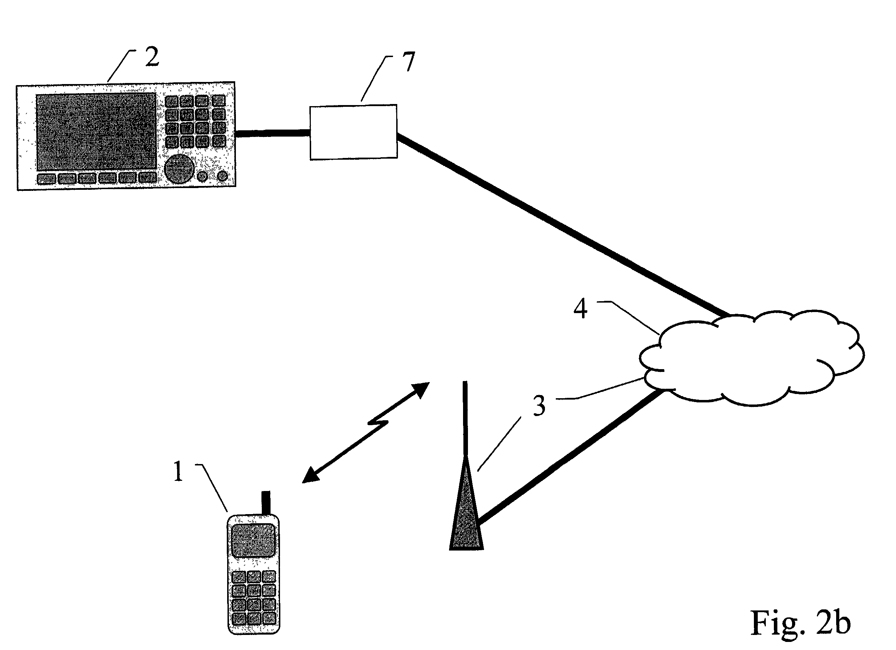

Figur 2a zeigt eine Anwendung mit einer sogenannten Peer-to-Peer-Übertragung. Die Verbindung erfolgt über das Mobilfunk- und Telefonfestnetz 3 bzw. 4 von dem mobilen Terminal 1 zu einem zweiten mobilen Terminal 9. Dieses zweite mobile Terminal 9 ist mit dem Messgerät über ein Kabel oder eine Infrarotübertragungsstrecke verbunden oder kann auch im Messgerät z.B. in Form eine PCMCIA-Karte eingebaut sein. Figur 2b zeigt eine Variante, bei der das Messgerät 2 einen Einwahldienst 7 über das Telefonfestnetz 4 bereitstellt.

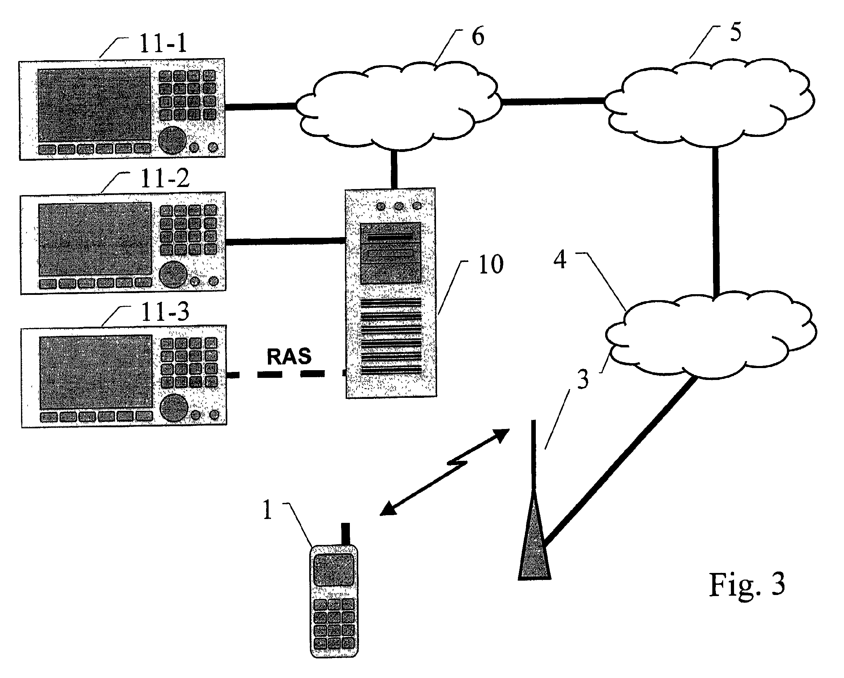

In dem System gemäß der Figur 3 ist ein Server 10 als zentrale Bedienereinrichtung vorgesehen, der in der Lage ist, die von einem mobilen Terminal als Befehle sendende Einheit empfangenen Signale gemäß den Protokollen des weltweiten mobilen Internets zu verarbeiten. Dabei kann außerdem dieser Server die eingehenden Daten von mehreren angeschlossenen und zu steuernden Mess- oder Überwachungsgeräten 11-1 bis 11-3 auszuwerten, zu speichern und zu verwalten. Der Server 10 kann gemäß dem Ausführungsbeispiel direkt mit einem oder mehreren Mess- oder Überwachungsgeräten 11-1 oder über ein Firmennetz 6 mit mehreren Mess- oder Überwachungsgeräten 11-1 verbunden sein. Des weiteren kann ein Mess- oder Überwachungsgerät 11-3 über eine Fernverbindung unter Verwendung des Mobilfunk- und Telefonfestnetzes am Server verbunden sein.

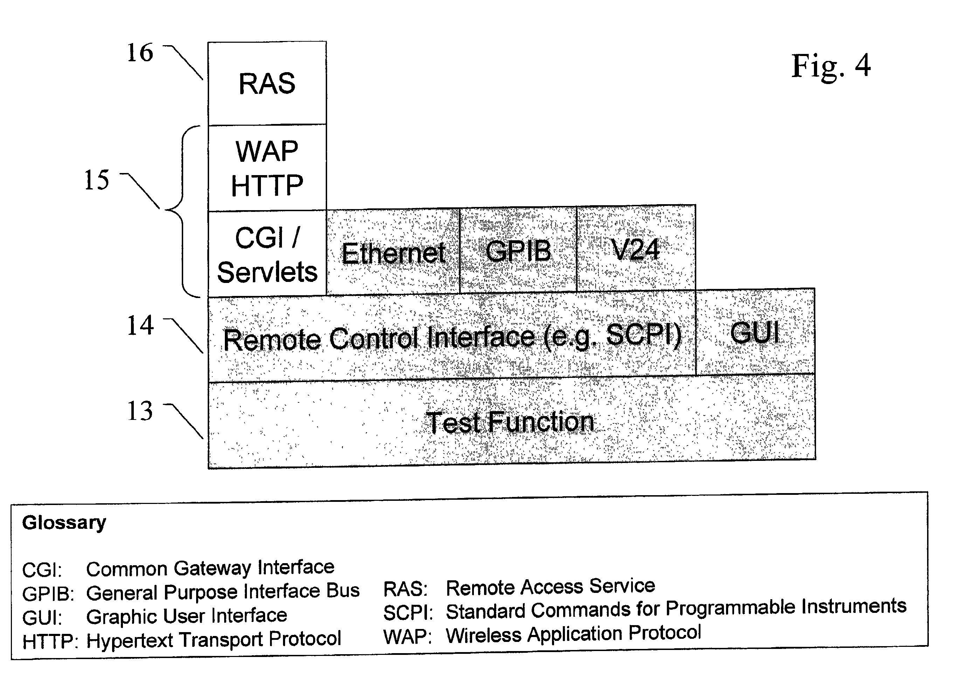

In Figur 4 ist schematisch die Architektur eines Mess- oder Überwachungsgeräts 2 dargestellt. Diese umfassen die Mess- oder Überwachungsfunktion 13, eine Steuerschnittstelle (Remote Control Interface) 14 (z.B. SCPI (Standard Commands for Programmable Instruments)) zum Umsetzen der Fernsteuerbefehle sowie eine graphische Benutzerschnittstelle (GUI). Für die Anwendung gemäß Figur 3 reichen die traditionellen Fernsteuermöglichkeiten. So werden bei den Messgeräten 11-1 und 11-2 in Figur 3 die Steuerkommandos über standardisierte Interfaces V24, GPIB (General Purpose Interface Bus) oder Ethernet übermittelt. Ist zusätzlich ein Modemtreiber implementiert, kann über die V24-Schnittstelle die Verbindung für da Messgerät 11-3 in Figur 3 realisiert werden. Der Server 10 stellt einen WAP-Dienst (Wireless Application Protocol) zum Informationsaustausch mit dem mobilen Terminal 1 bereit. Über das HTTP (Hypertext Transport Protocol) und z.B. das CGI (Common Gateway Interface) erzeugt er Steuersequenzen, die dem Messgerät über die vorher genannten Fernsteuerschnittstellen zugeführt werden.

Die Erweiterungen 15 ermöglichen den Betrieb entsprechend den Figuren 1a bis 1c indem ein WAP-Dienst den Informationsaustausch mit dem mobilen Terminal 1 abwickelt. Die Kommunikation zum Fernsteuerinterface 14 erfolgt über HTTP und z.B. CGI. Die Benutzung von Servlets ist anstelle von CGI ebenfalls möglich.

Zur Realisierung der Anwendungen gemäß Figur 2a und 2b wird zusätzlich die Implementierung des Einwahldienstes (RAS (Remote Access Service) / PPP (Point to Point Protocol)) 16 benötigt. Ist einmal eine Verbindung aufgebaut, ist der Betrieb entsprechend wie in den Figuren 1a bis 1c.

Mit dem gesamten System und dem Verfahren ist auf Grund der Benutzung handelsüblicher mobiler Terminals ohne die Notwendigkeit, deren Konfiguration zu verändern oder noch zusätzliche Software zu installieren, kostengünstig möglich, Mess- oder Überwachungstätigkeiten bei entfernten Messgeräten durchzuführen.

## Patentansprüche

1. Verfahren zum Betreiben eines fernbedienbaren Mess- oder Überwachungsgeräts mittels eines Kommunikationsnetzwerkes, **dadurch gekennzeichnet, dass** mittels eines gemäß den Protokollen des mobilen Internets (Mobilfunksystem und Internet) arbeitenden handelsüblichen mobilen Terminals (1) das Mess- oder Überwachungsgerät (2) gesteuert wird.

2. Verfahren nach Anspruch 1, **dadurch gekennzeichnet, dass** die von dem mobilen Terminal (1) gesendeten Signale über ein oder mehrere Festnetze (4, 5, 6) zu einer dem Mess- oder Überwachungsgerät (2) zugeordneten Bedienereinrichtung übertragen, von dieser die Signale entsprechend den Protokollen der Mobilfunknetze, des Internets und des mobilen Internets in Befehle umgewandelt und zur Steuerung dem Mess- oder Übertragungsgerät zugeleitet werden.

3. Verfahren nach Anspruch 1, **dadurch gekennzeichnet, dass** die von dem mobilen Terminal (1) gesendeten Signale über ein Telefonnetz (3, 4) zu einem empfangendem mobilen Terminal (9) gesendete und dort zu einem im Mess- oder Überwachungsgerät (2) zugeordneten Bedienereinrichtung geleitet werden, die die Signale entsprechend den Protokollen der Mobilfunknetze, des Internets und des mobilen Internets in Befehle umwandelt und zur Steuerung dem Mess- oder Überwachungsgerät zugeleitet werden.

4. Verfahren nach Anspruch 1, **dadurch gekennzeichnet, dass** die von dem mobilen Terminal (1) gesendeten Signale über ein Telefonfestnetz (4) zu einer zentralen Bedienereinrichtung (10) übertragen und die Signale entsprechend den Protokollen der Mobilfunknetze, des Internets und des mobilen Internets in Befehle umgewandelt und zur Steuerung der jeweiligen Geräte (11-1 bis 11-3) zugeleitet werden.

5. Verfahren nach Anspruch 4, **dadurch gekennzeichnet, dass** über die Bedienereinrichtung (10) Mess- oder Überwachungsgeräte (11-1, 11-2, 11-3), die an ein Firmennetz (6) angeschlossen sind, direkt mit der Bedienereinrichtung (10) verbunden sind und/oder mittels Modems an ein Telefonfestnetz angeschlossen sind, gesteuert werden.

6. System zum Betreiben eines fernbedienbaren Mess- oder Überwachungsgeräts mittels eines Kommunikationsnetzwerkes, **gekennzeichnet durch**
mindestens ein handelsübliches mobiles Terminal (10),
ein Mobilfunksystem (3) zum Übertragen der von dem Terminal gesendeten Signale,
eine Einrichtung zum Übertragen der Signale von dem Mobilfunksystem zu einer Bedienereinrichtung, die die gemäß den Protokollen des Mobilfunksystems und des mobilen Internets gesendeten Signale umsetzt und das Mess- oder Überwachungsgerät (2) entsprechend steuert.

7. System nach Anspruch 6, **dadurch gekennzeichnet, dass** die Einrichtung zur Übertragung der Signale ein oder mehrere Festnetze (4, 5, 6) sind.

8. System nach Anspruch 6, **dadurch gekennzeichnet, dass** die Einrichtung zur Übertragung der Signale ein mobiles Terminal (9) ist.

9. System nach Anspruch 6, **dadurch gekennzeichnet**, das die Einrichtung zur Übertragung der Signale das Telefonfestnetz (4) ist.

10. System nach Anspruch 9, **dadurch gekennzeichnet, dass** die Bedienereinrichtung als zentrale Bedienereinrichtung (10) Mess- oder Überwachungsgeräte (11-1 bis 11-3), die an ein Firmennetz (6) angeschlossen sind, direkt mit der Bedienereinrichtung (10) verbunden sind und/oder mittels eines Modems an ein Telefonfestnetz (4) angeschlossen sind, steuert.
